# EUROPÄISCHE PATENTANMELDUNG

(11) **EP 0 846 820 A1**
(43) Veröffentlichungstag der Anmeldung: **10.06.1998**
(21) Anmeldenummer: 96119631.8
(22) Anmeldetag: 06.12.1996
(51) Int. Cl.: E05B 49/00, E05B 17/04

(54) **Schliesssystem, insbesondere für ein Kraftfahrzeug**

(71) Anmelder: SIEMENS AKTIENGESELLSCHAFT, 80333 München (DE)
(72) Erfinder: Setescak, Stephen Edward, 93051 Regensburg (DE)

(57) **Zusammenfassung**

Wenn ein Schlüssel (2) in ein Schloß (1) eingeführt wird, so wird zunächst über eine Sende- und Empfangseinheit (5) eine elektronische Authentifikation durchgeführt. Nach erfolgreicher Authentifikation wird das Schloß (1) elektromechanisch freigegeben, damit es mit Hilfe des Schlüssels (2) mechanisch entriegelt werden kann. Solange die Authentifikation noch nicht oder nicht erfolgreich stattgefunden hat, kann der Schlüssel (2) zwar im Schloß (1) verdreht werden, ein mechanisches Entriegeln ist aber nicht möglich.

## Beschreibung

Die Erfindung betrifft ein Schließsystem, insbesondere zum Ver- oder Entriegeln von Türschlössern oder von einem Lenk/Zündschloß eines Kraftfahrzeugs.

Ein bekanntes Schließsystem (DE 44 34 587 A1) weist ein Zündschloß auf, in das ein Schlüssel eingesteckt wird. In dem Zündschloß ist eine Sende- und Empfangseinheit angeordnet, die ein Codesignal von einem Codegeber, der auf dem Schlüssel angeordnet ist, empfängt. Mit Hilfe des Codesignals findet eine Authentifikation statt, durch die bei erfolgreichem Verlauf eine elektronische Wegfahrsperre gelöst wird.

Bei dem bekannten Schließsystem kann der Schlüssel im Zündschloß erst dann verdreht werden, wenn die Authentifikation erfolgreich durchgeführt wurde. Erst dann gibt ein Sperrglied das mechanische Drehen des Schlüssels frei. Vorher kann der Schlüssel nicht im Zündschloß verdreht werden. Wenn der Schlüssel im Lenkschloß verdreht wird, so wird das Lenkschloß entriegelt.

Wenn ein unberechtigter Benutzer den Schlüssel bei einem solchen Schließsystem mit Gewalt im Zündschloß dreht, und das bevor der Vorgang der Authentifikation stattgefunden hat, so kann das Lenkschloß unerlaubterweise entriegelt und somit das Kraftfahrzeug entwendet werden. Beim gewaltsamen Drehen des Schlüssels können auch Teile in dem Zündschloß zerstört werden.

Der Erfindung liegt das Problem zugrunde, ein Schließsystem zu schaffen, das das Kraftfahrzeug sicher vor unberechtigtem Zugriff schützt.

Dieses Problem wird erfindungsgemäß durch die Merkmale von Patentanspruch 1 gelöst. Dabei geschieht das Entriegeln des Schlosses erst dann, wenn zuvor eine Authentifikation erfolgreich durchgeführt wurde. Vor der Authentifikation kann der Schlüssel im Schloß ohne Auswirkung beliebig gedreht werden. Zusatzgerät, wie Autoradio, werden erst mit dem Drehen des Schlüssels mit Energie versorgt.

Vorteilhafte Ausgestaltungen der Erfindung sind in den Unteransprüchen gekennzeichnet. So wird das Einführen des Schlüssels in das Schloß durch einen Schalter sofort erkannt und daraufhin der Authentifikationsvorgang ausgelöst. Vorteilhafterweise findet der Vorgang der Authentifikation durch induktiv übertragene Codesignale statt, deren Reichweite sehr gering ist. Damit können die Codesignale nur schwer unberechtigterweise mitgehört werden.

Ausführungsbeispiele der Erfindung werden im folgenden anhand der schematischen Zeichnungen näher erläutert. Es zeigen:
- Figur 1:: ein Blockschaltbild des erfindungsgemäßen Schließsystems,
- Figur 2:: einen Schnitt durch ein Schloß des Schließsystems, und
- Figur 3:: einen Schnitt durch das Schloß entlang der Linie III-III in Figur 2.

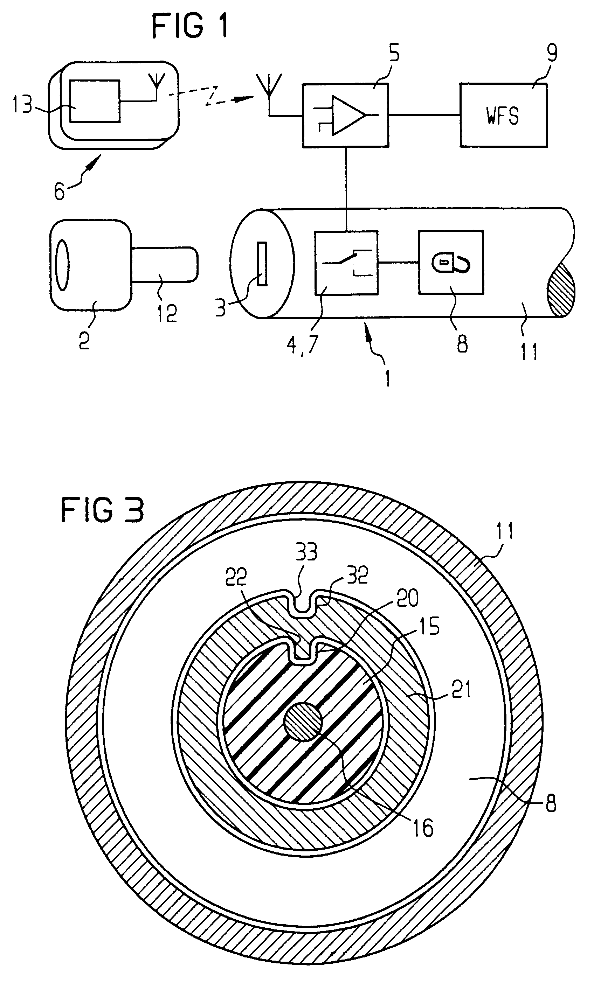

Ein Schließsystem, insbesondere zum Ver- oder Entriegeln von Türschlössern oder einem Lenk-/Zündschloß eines Kraftfahrzeugs, weist ein Schloß 1 (Figur 1) auf, in das ein Schlüssel 2 eingesteckt wird. Der Schlüssel 2 wird dabei in einer Aufnahme des Schlosses 1 (im folgenden als Schlüsselloch 3 bezeichnet) eingeführt. Eine Schalteinrichtung (im folgenden als Schalter 4 bezeichnet) im Inneren des Schlosses 1 erkennt den eingesteckten Schlüssel 2 und erzeugt infolgedessen ein Schaltsignal. Eine Sende- und Empfangseinheit 5 wird daraufhin mit dem Schaltsignal angesteuert, damit zunächst eine Authentifikation stattfindet, bei der eine Berechtigung nachgewiesen wird, das betreffende Schloß 1 zu entriegeln.

Die Sende- und Empfangseinheit 5 sendet hierzu drahtlos ein Fragecodesignal zu einem tragbaren Codegeber 6, der daraufhin sein charakteristisches Antwortcodesignal zurücksendet.

Das Antwortcodesignal wird von der Sende- und Empfangseinheit 5 empfangen und dort in einer nicht explizit dargestellten Vergleichseinheit mit einem erwarteten Sollcodesignal verglichen. Wenn die beiden Codesignale zumindest weitgehend übereinstimmen, so erzeugt die Vergleichseinheit ein Freigabesignal. Das Freigabesignal steuert eine Freigabeeinrichtung 7 in dem Schloß 1 an, wodurch diese ermöglicht, daß eine Riegelvorrichtung 8 mit Hilfe des Schlüssels 2 mechanisch betätigt werden kann.

Gleichzeitig kann das Freigabesignal auch an eine elektronische Wegfahrsperre, die beispielsweise in einem Motorsteuergerät 9 enthalten ist, gesendet werden. Wenn das Motorsteuergerät 9 freigegeben ist, wird ein Starten des Motors und ein Fahren des Kraftfahrzeugs ermöglicht.

Der Schlüssel 2 wird bei dem erfindungsgemäßen Schließsystem erst dann in mechanische Wirkverbindung mit der Riegelvorrichtung 8 gebracht, wenn die Sende- und Empfangseinheit 5 zuvor ein berechtigtes Codesignal (Authentifikation) empfangen hat. Zuvor kann der Schlüssel 2 im Schloß 1 zwar verdreht werden, dies hat jedoch keine Auswirkung auf das Entriegeln des Schlosses 1.

Wenn der Schlüssel 2 in mechanischer Wirkverbindung mit der Riegelvorrichtung 8 ist, so wird das betreffende Schloß 1, wie das Lenk-/Zündschloß oder ein Türschloß mechanisch infolge des Drehens des Schlüssels 2 entriegelt. Mit dem Ver- oder Entriegeln eines Türschlosses können auch alle anderen Türschlösser und das Kofferraumschloß (Zentralverriegelung) eines Kraftfahrzeugs nachfolgend über elektrische Verbindungsleitungen, wie einem Fahrzeugbus, in ihren ver- bzw. entriegelten Zustand gesteuert werden.

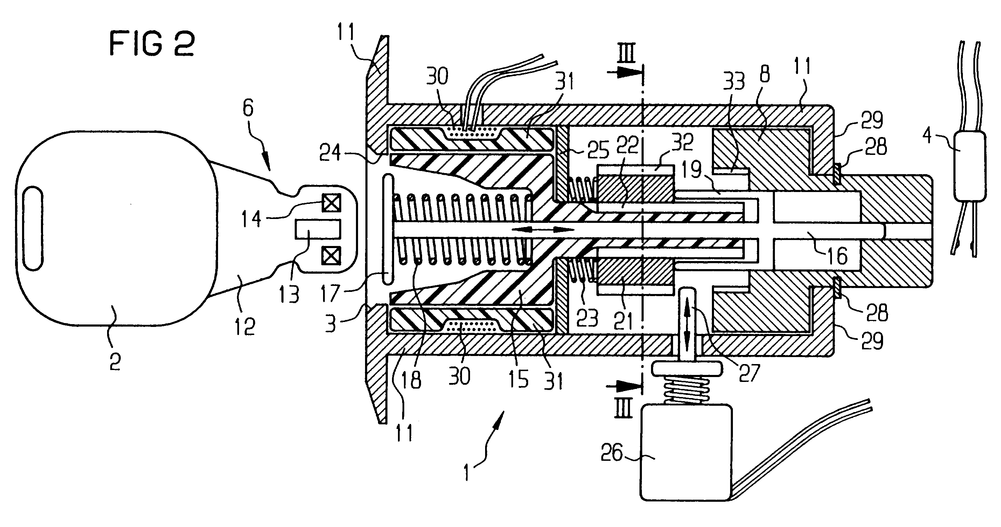

In der Figur 2 ist der mechanische Aufbau des Schließsystems, insbesondere des Schlosses 1 dargestellt. Das Schloß 1 besteht aus einem etwa zylinderförmigen Gehäuse 11, das das Schlüsselloch 3 an seiner Vorderseite aufweist. In dieses Schlüsselloch 3 wird der herkömmlicher mechanischer Schlüssel 2 hineingesteckt. Das Schlüsselloch 3 ist dabei so ausgebildet, daß der Schlüssel 2 nur in einer bestimmten Winkellage in das Schloß 1 eingesteckt werden kann, wie das derzeit beispielsweise auch bei Zylinderschlössern der Fall ist.

Der Schlüssel 2 benötigt allerdings keine mechanische Codierung. Bei dem Ausführungsbeispiel nach Figur 2 weist der Schlüssel 2 jedoch eine elektronische Codierung in Form des Codegebers 6 auf, der hier auf dem Schlüssel 2, und zwar auf dem Schlüsselschaft 12 angeordnet ist.

Der Codegeber 6 ist bei diesem Ausführungsbeispiel als Transponder ausgebildet. Hierzu weist er einen integrierten Transponder-Schaltkreis (Transponder-IC 13) mit elektronischen Speichern auf, in denen das Antwortcodesignal gespeichert sein kann. Es kann auch ein mathematischer Algorithmus in den Speichern gespeichert sein, mit dessen Hilfe das Antwortcodesignal erzeugt wird.

Das Transponder-IC 13 ist mit einer Spule 14, die als Sende- und Empfangsantenne dient, elektrisch verbunden. Über die Spule 14 wird das Fragecodesignal empfangen und das Antwortcodesignal zurückgesendet.

In der Figur 2 ist der Schlüssel 2 außerhalb des Schlosses 1, d.h. im nicht eingesteckten Zustand des Schlüssels 2 dargestellt. Daher wird zunächst der Aufbau des Schlosses 1 in diesem Zustand näher erläutert.

In dem Gehäuse 11 des Schlosses 1 ist eine hohlzylindrische Welle 15 drehbar gelagert. Der vordere Bereich der Welle 15 hat einen großen Durchmesser und kann den Schlüsselschaft 12 aufnehmen. In der Mittelachse der Welle 15 ist ein Schieber 16 axial beweglich (vgl. Pfeilrichtung in Figur 2)gelagert. An seinem vorderen Ende (dies entspricht in der Figur 2 der linken Seite) weist der Schieber 16 eine Führungsscheibe 17 auf, an die der Schlüsselschaft 12 anstößt, wenn der Schlüssel 2 in das Schloß 1 eingeführt wird. Der Schieber 16 wird durch eine erste Feder 18, die gegen die Führungsscheibe 17 drückt, in Richtung des Schlüssellochs 3 gedrückt, so daß die Führungsscheibe 17 an dem Schlüsselloch 3 anliegt.

Einstückig mit dem Schieber 16 weist dieser in seinem hinteren Bereich einen zylindrisch oder etwa topfförmig ausgebildeten Schieberanschlag 19 auf.

Die Welle 15 weist in ihrem hinteren Bereich eine oder mehrere Stege oder Nuten 20 (Figur 3; Schnitt ist vergrößert dargestellt) auf, auf denen ein hohlzylindrischer Mitnehmer 21 axial beweglich gelagert ist. Der Mitnehmer 21 weist hierzu seinerseits eine oder mehrere Nuten bzw. Stege 22 auf, die in die Stege bzw. Nuten 20 der Welle 15 eingreifen. Somit besteht eine mechanische Wirkverbindung zwischen der Welle 15 und dem Mitnehmer 21. Wenn die Welle 15 um ihre Achse gedreht wird, so dreht sich der Mitnehmer 21 mit.

Der Mitnehmer 21 wird durch eine zweite Feder 23 gegen den Schieberanschlag 19 gedrückt, d.h. der Mitnehmer 21 liegt unter Vorspannung an dem Schieberanschlag 19 an. Wenn sich der Schieberanschlag 19 nach hinten bewegt, so wird dadurch ermöglicht, daß sich auch der Mitnehmer 21 nach hinten bewegen kann.

Die zweite Feder 23 ist gegen einen fest mit dem Gehäuse 11 verbundenen Anschlag 25 abgestützt. Dadurch kann sich die zweite Feder 23 nur nach hinten ausdehnen. Der Anschlag 25 hat zudem die Funktion, daß er die Welle 15 abstützt. Somit kann diese nicht weiter in das Schloß 1 hinein gedrückt werden. Eine Bewegung der Welle 15 nach vorne wird durch einen vorderen Rand 24 des Gehäuses 11 im Bereich des Schlüssellochs 3 verhindert.

Außerdem weist das Schloß 1 einen als Freigabeeinrichtung 7 wirkenden elektromagnetischen Hubmagneten 26 auf, dessen Hubkolben 27 im nichterregten Zustand des Hubmagneten 26 (Sperrposition) näher an der Welle 15 (wie in der Figur 2 dargestellt ist) als im erregten Zustand (Freigabeposition) angeordnet ist. Wenn der Hubmagnet 26 erregt wird, zieht der Magnet an und der Hubkolben 27 bewegt sich (vgl. Pfeilrichtung in Figur 2) nach unten, d.h. von der Welle 15 in radialer Richtung weg.

Am hinteren Ende (in der Figur 2 am rechten Ende des Schlosses 1) ist die zylinderförmige Riegelvorrichtung 8 angeordnet. Wenn diese Riegelvorrichtung 8 mechanisch betätigt wird, so wird ein nicht dargestellter Riegel von seiner Verriegelungsposition in seine Entriegelungsposition oder umgekehrt bewegt. Damit wird das betreffende Schloß 1 ent- bzw. verriegelt.

Ein oder mehrere Stifte 28 in der Riegelvorrichtung 8 verhindern, daß die Riegelvorrichtung 8 nach vorne zum Schlüsselloch 3 hin gezogen wird. Außerdem hintergreift ein hinterer Rand 29 des Gehäuses 11 die Riegelvorrichtung 8, so daß auch ihre Bewegung nach hinten verhindert wird. Somit ist die Riegelvorrichtung 8 bei diesem Ausführungsbeispiel lediglich drehbar gelagert.

Wenn der Schlüssel 2 in das Schloß 1 eingesteckt wird, so stößt er zunächst an die Führungsscheibe 17 an und schiebt dabei den Schieber 16 entgegen der Federkraft der ersten Feder 18 in axialer Richtung nach hinten (in Figur 2 nach rechts). Das Abziehen des Schlüssels 2 wird durch die erste Feder 18 erleichtert, da der Schlüssel 2 zuvor entgegen der Federkraft eingesteckt wurde.

Der Schlüssel 2 kann nur in einer bestimmten Winkellage in das Schlüsselloch 3 eingesteckt und auch aus diesem entfernt werden, wie es auch bei herkömmlichen Zylinderschlössern der Fall ist. Wenn der Schlüssel 2 im Schloß 1 verdreht wird, so ist ein Abziehen des Schlüssels 2 nicht möglich.

Der Schieberanschlag 19 liegt zunächst vorgespannt an dem Mitnehmer 21 an. Hierzu ist es erforderlich, daß die erste Feder 18 stärker ausgebildet ist als die zweite Feder 23, die den Mitnehmer 21 vorgespannt hält. Wenn der Schlüssel 2 nun in das Schloß 1 eingeführt wird, so wird der Schieber 16 und mit ihm der Schieberanschlag 19 nach hinten (in der Figur 2 nach rechts) bewegt. Durch die Federkraft der zweiten Feder 23 wird der Mitnehmer 21 ebenfalls nach hinten gedrückt.

Allerdings wird die Bewegung des Mitnehmers 21 nach hinten zunächst durch den Hubkolben 27 des Hubmagneten 26 aufgehalten, da sich der Hubkolben 27 zunächst in seiner Sperrposition befindet. Der Mitnehmer 21 stößt an den Hubkolben 27 an, auch wenn der Schieber 16 noch weiter nach hinten bewegt wird. Der äußere Umfang des Mitnehmers 21 berührt in dieser Position nicht die Riegelvorrichtung 8, d.h. der Mitnehmer 21 ist in einer sogenannten Freilaufposition und steht in keiner mechanischen Wirkverbindung mit einem anderen Teil.

Wenn der Schlüssel 2 weit genug ins Schloß 1 eingesteckt wird, so greift der Schlüsselschaft 12 in einen nicht dargestellten Schlitz der Welle 15. Wenn der Schlüssel 2 gedreht wird, so dreht er die Welle 15 mit (ähnlich einem Schraubenzieher, der eine Schraube dreht).

Da der Mitnehmer 21 in mechanischer Wirkverbindung mit der Welle 15 steht, dreht sich auch der Mitnehmer 21 mit. Allerdings läuft der Mitnehmer 21 "frei", solange er sich in seiner Freilaufposition befindet. Selbst ein gewaltsames Drehen in dieser Position bewirkt kein Entriegeln. Auch kann dabei nichts zerstört werden, da sich der Mitnehmer 21 synchron zum Drehen des Schlüssels 2 dreht und nirgends weiter eingreift.

Beim Einstecken des Schlüssels 2 wird der Schieber 16 nach hinten geschoben. Das hintere Ende des Schiebers 16 betätigt einen Schalter 4, wenn der Schlüssel 2 ins Schloß 1 eingesteckt ist. Der Schalter 4 erzeugt dabei ein Schaltsignal. Somit wird erkannt, ob der Schlüssel 2 im Schlüsselloch 3 steckt.

Der Schalter 4 ist mit der Sende- und Empfangseinheit 5 verbunden. Die Sende- und Empfangseinheit 5 weist ebenfalls eine Spule 30 als Sende- und Empfangsantenne auf. Die Spule 30 ist im vorderen Bereich des Schlosses 1 angeordnet. Wenn der Schlüssel 2 im Schloß 1 steckt, so ist die Spule 14 des Transponders in unmittelbarer Nähe der Spule 30 der Sende- und Empfangseinheit 5 angeordnet.

Vorteilhaft ist es, wenn die Spule 30 der Sende- und Empfangseinheit 5 um das Schloß im Bereich des Schlüsselschaft 12 des eingesteckten Schlüssels 2 angeordnet ist. Die Spule 30 kann auf einen zylinderförmigen Spulenkörper 31 gewickelt sein, der seinerseits auf der Innenseite des Gehäuses 11 angeordnet ist.

Bei dem Ausführungsbeispiel nach Figur 2 ist der Transponder auf dem Schlüssel 2, und zwar auf dem Schlüsselschaft 12 angeordnet. Wenn der Schlüssel 2 im Schloß 1 steckt, so ist die Spule 14 des Transponder in der Nähe der Spule 30 der Sende- und Empfangseinheit 5 angeordnet. Somit ist eine gute und sicher induktive Übertragung von Daten oder Energie zwischen den beiden Spulen gewährleistet. Da induktive übertragene Signal nur eine Geringe Reichweite haben, können somit die Signale nur sehr schwer unberechtigterweise mitgehört werden.

Wenn die Sende- und Empfangseinheit 5 das Schaltsignal des Schalters 4 empfängt, so wird ein Dialog zwischen dem Schlüssel 2 und dem Schloß 1 eingeleitet, d.h. es findet eine sogenannte Authentifikation statt, bei der der Schlüssel 2 seine Berechtigung zum Entriegeln des Schlosses 1 nachweist.

Hierzu sendet die Sende- und Empfangseinheit 5 über ihre Spule 30 ein Fragecodesignal aus. Über die Spule 14 des Transponders wird das Fragecodesignal empfangen. Der Transponder erzeugt daraufhin ein Antwortcodesignal, das er über seine Spule 14 zurück zu der Sende- und Empfangseinheit 5 sendet.

Die Vergleichseinheit in der Sende- und Empfangseinheit 5 wertet das empfangene Antwortcodesignal aus (Demodulation). In der Vergleichseinheit ist ein als gültig erwartetes Sollcodesignal gespeichert oder wird dort mit dem gleichen Algorithmus, wie im Transponder, erzeugt. Das Antwortcodesignal wird dann mit dem Sollcodesignal verglichen. Wenn die beiden Signale übereinstimmen, so wird ein Freigabesignal erzeugt.

Das Freigabesignal steuert den Hubmagnet 26 an. Wenn der Hubmagnet 26 erregt wird, so bewegt sich dessen Hubkolben 27 - in der Figur 2 - nach unten in seine Freigabeposition. Der Hubkolben 27 gibt somit den Weg für den Mitnehmer 21 frei.

Der Mitnehmer 21 bewegt sich infolge der Federkraft der zweiten Feder 23 nach hinten, bis er mechanisch in die Riegelvorrichtung 8 eingreift. Der Mitnehmer 21 befindet sich dann in seiner Riegelposition, in der er in mechanischer Wirkverbindung mit der Riegelvorrichtung 8 steht.

Hierzu weist der Mitnehmer 21 an seinem äußeren Umfang eine oder mehrere Nuten 32 (Figur 3)oder Stege auf, die in eine oder mehrere Stege 33 bzw. Nuten auf dem inneren Umfang der Riegelvorrichtung 8 eingeschoben werden.

Der Mitnehmer 21 kann auch als scheibenförmiges Zahnrad mit einem äußeren Zahnkranz und die Riegelvorrichtung 8 als ringförmiges Zahnrad mit einem inneren Zahnkranz ausgebildet sein, die dann ineinandergreifen, wenn der Mitnehmer 21 mit Hilfe der zweiten Feder 23 in die Riegelvorrichtung 8 eingeschoben ist

Der Mitnehmer 21 kann auch an seinem äußeren Umfang einen einzelne hervorstehenden Dorn aufweisen, der in eine Ausnehmung der Riegelvorrichtung 8 eingreift oder an einen Anschlag der Riegelvorrichtung 8 angreift und diese somit mitdreht.

Auf diese Weise kommt der Schlüssel 2 in mechanische Wirkverbindung mit der Riegelvorrichtung 8. Beim Drehen des Schlüssels 2 wird das Schloß 1 ver- oder entriegelt.

Für die Erfindung ist es unwesentlich, wie der Mitnehmer 21 ausgebildet ist, um in mechanische Wirkverbindung mit der Riegelvorrichtung 8 zu gelangen. Wichtig ist hingegen, daß der Mitnehmer 21 ein mechanisches Teil (hier Nut 32) aufweist, das in ein mechanisches Teil (hier Steg 33) der Riegelvorrichtung 8 derart eingreift, daß beim Drehen des Mitnehmers 21 die Riegelvorrichtung 8 mechanisch betätigt wird.

Wenn der Mitnehmer 21 in Wirkverbindung mit der Riegelvorrichtung 8 ist, so kann der Hubmagnet 26 wieder entregt werden. Der Hubkolben 27 legt sich dann auf den äußeren Umfang des Mitnehmers 21 auf, ohne diesen in seiner axialen oder rotatorischen Bewegung zu behindern.

Es genügt also, wenn der Hubmagnet 26 nur kurzzeitig (beispielsweise etwa 100 ms) erregt wird. Innerhalb dieser Zeit bleibt der Hubkolben 27 angezogen (Freigabeposition). Diese Zeitdauer reicht aus, daß sich der Mitnehmer 21 in die Riegelvorrichtung 8 hinein bewegt und in diese mechanisch eingreift. Danach kann der Hubmagnet 26 wieder entregt werden, d.h. der Strom durch den Hubmagneten 26 kann wieder abgeschaltet werden, so daß er keine Energie mehr verbraucht. Der Hubmagnet 26 bleibt dann solange entregt, bis der Schlüssel 2 erneut wieder in das Schloß 1 eingesteckt wird (d.h. zumindest solange das Schloß 1 entriegelt; auch wenn das Schloß 1 ohne eingesteckten Schlüssel 2 verriegelt ist, ist der Hubmagnet 26 entregt oder strom- und spannungslos).

Wenn der Schlüssel 2 wieder aus dem Schloß 1 abgezogen wird, so zieht der Schieberanschlag 19 den Mitnehmer 21 entgegen der Federkraft der zweiten Feder 23 aus der Riegelvorrichtung 8 heraus. Das Herausziehen wird durch die erste Feder 18 bewerkstelligt, deren Federkraft hierzu wesentlich größer sein muß als die Federkraft der zweiten Feder 23.

Wenn der Schlüssel 2 ganz aus dem Schloß 1 entnommen ist, so ist der Mitnehmer 21 wieder in seiner Freilaufposition und der Hubkolben 27 des Hubmagneten 26 rastet hinter dem Mitnehmer 21 automatisch in seine Verriegelungsposition ein (ohne daß der Hubmagnet erregt wird und ohne daß dabei elektrische Energie verbraucht). Die Bewegung des Mitnehmers 21 nach hinten ist somit selbsttätig wieder gesperrt. Infolgedessen wird nur zum Entriegeln des Schlosses 1 kurzzeitig Energie (Strom/Spannung) benötigt. Zum Verriegeln braucht der Schlüssel 2 lediglich im Schloß 1 zurückgedreht und aus dem Schloß 1 abgezogen werden.

Wenn der Schlüssel 2 im Schloß 1 steckt, so steht der Mitnehmer 21 nicht in mechanischer Wirkverbindung mit der Riegelvorrichtung 8, solange die Authentifikation nicht oder nicht erfolgreich stattgefunden hat. Die mechanische Wirkverbindung wird durch den Hubkolben 27 verhindert, der die axiale Bewegung des Mitnehmers 21 hindert. In diesen Zustand kann der Schlüssel 2 jedoch im Schloß 1 beliebig gedreht werden. Dabei dreht sich die Welle 15 und der Mitnehmer 21, der mit der Welle 15 in Wirkverbindung steht, synchron zu der Drehung des Schlüssels 2. Ein Entriegeln ist dabei nicht möglich, da der Mitnehmer 21 nicht in die Riegelvorrichtung 8 eingreifen kann. Ein gewaltsames Drehen des Schlüssels 2 führt daher zu keiner Zerstörung des Schlosses 1 und auch nicht zum Entriegeln des Schlosses 1.

In axialer Richtung kann der Schlüssel 2 ebenfalls im Schloß 1 bewegt werden, zum Teil auch gewaltsam, ohne daß ein bemerkenswerter Schaden entsteht. Der Schieber 16 wird zwar dann nach hinten bewegt, stößt aber lediglich an die Welle 15 an. Überdies kann der Schalter 4 betätigt werden, der den Dialog zwischen Schlüssel 2 und Codegeber 6 auslöst. Wenn ein nicht berechtigter Codegeber 6 verwendet wird, so kann kein Entriegeln stattfinden. Aus diesem Grunde kann das Schloß 1 nicht durch Gewaltanwendung überwunden werden.

Der Schalter 4 kann ein Tastschalter sein, der dann schaltet, wenn sich seine zwei Kontakte berühren. Für die Erfindung ist es jedoch unwesentlich, wie der Schalter 4 ausgebildet ist und wo er angeordnet ist. Für die Erfindung ist es wesentlich, daß der Schalter 4 geschaltet wird und das Schaltsignal erzeugt, wenn der Schlüssel 2 in das Schloß 1 eingeführt wird.

So kann der Schalter 4 beispielsweise als berührungsloser Schalter 4 ausgebildet sein, der optisch, magnetisch oder induktiv erkennt, ob der Schlüssel 2 in das Schloß 1 eingeführt ist. Selbstverständlich kann auch ein Näherungsschalter verwendet werden, der berührungslos arbeitet und die Position oder die axiale Bewegung des Schiebers 16 erkennt. Der Schalter 4 kann innerhalb des Gehäuses 11 oder auch - wie in der Figur 2 dargestellt - außerhalb des Gehäuses 11 angeordnet sein.

Als Codegeber 6 kann der Transponder - wie in Figur 2 dargestellt - auf dem Schlüssel 2 angeordnet sein. Es können aber auch separate Codegeber 6, beispielsweise in Form eines Transponders auf einer Chipkarte (Smart Card) oder in einem sonstigen Gehäuse verwendet werden.

Es genügt auch, wenn die Sende- und Empfangseinheit 5 lediglich ein Codesignal von dem Codegeber 6 empfängt (ohne das Fragecodesignal auszusenden). Hierzu kann der Codegeber 6 eine Taste aufweisen, bei deren Betätigung das Codesignal ausgesendet wird. Dann muß allerdings der Schlüssel 2 innerhalb einer vorgegebenen Zeitdauer in das Schlüsselloch 3 eingesteckt werden. Sobald die Berechtigung des Codesignals überprüft wurde, wird der Hubmagnet 26 erregt, so daß der Mitnehmer 21 infolge des eingesteckten Schlüssels 2 in Wirkverbindung mit der Riegelvorrichtung 8 gebracht werden kann.

Der Hubmagnet 26 beleibt entsprechend der vorgegebenen Zeitdauer erregt und somit in seiner Freigabeposition. Daher bleibt das Schloß 1 in diesem Fall, in dem der Schlüssel noch nicht eingeführt ist, nicht dauerhaft freigegeben. Nach Ablauf der Zeitdauer wird das Schloß 1 wieder gesperrt, indem der Hubmagnet 26 entregt wird und sich der Hubkolben 27 in seine Sperrposition bewegt. Nur in der Freigabeposition ist es möglich, mit Hilfe des Schlüssels 2 das Schloß 1 mechanisch zu entriegeln. Falls das Codesignal des Codegebers 6 versehentlich ausgesendet wurde, so ist das Schloß 1 nur während der vorgegebenen Zeitdauer bereit durch den Schlüssel 2 entriegelt zu werden.

Statt des Hubmagneten 26 mit seinem Hubkolben 27 als Freigabeeinrichtung 7 kann auch eine funktionsgleiche, elektromechanische Freigabeeinrichtung, wie beispielsweise ein piezoelektrische Wandlereinrichtung, die - durch das Freigabesignal gesteuert - als Sperre/Freigabe für die axiale Bewegung des Mitnehmers 21 dient. Eine solche elektromechanische Einrichtung kann auch axial ausgebildet sein, bei der sich dann die Sperre/Freigabe in axialer Richtung auf den Mitnehmer 21 hinzubewegt bzw. von diesem wegbewegt, je nachdem ob das Freigabesignal kommt oder nicht.

Die Welle 15 ist vorteilhafterweise aus einem torsionssteifen (-festen) Kunststoff hergestellt. Sie kann auch durch Glasfaser verstärkt sein. Somit wird das durch den Schlüssel 2 erzeugte Drehmoment mechanisch auf den Mitnehmer 21 und von diesem auf die Riegelvorrichtung 8 gut übertragen. Das Schloß 1 wird somit mit Hilfe des Schlüssels 2 sicher entriegelt.

Wenn die Welle 15 aus Kunststoff hergestellt ist, so schwächt sie das durch die Spulen 14, 30 erzeugte elektromagnetische Feld nicht ab, falls die Codesignale induktiv oder als Funksignale übertragen werden. Wenn die Codesignale optisch übertragen werden, so ist die Welle 15 aus einem lichtdurchlässigen Material hergestellt.

Die Codesignale sind amplituden-, frequenz- oder phasenmodulierte Signale, die wie bei dem in Figur 2 dargestellten Ausführungsbeispiel induktiv übertragen werden. Ebenso können die Codesignale als Hochfrequenzsignale oder als optische Signale übertragen werden. Wesentlich für die Erfindung ist es, daß durch das Codesignal eine Berechtigung elektronisch nachgewiesen wird, wodurch erst dann ein mechanisches Entriegeln des Schlosses 1 durch Schlüssel 2 ermöglicht wird.

Die Codesignale können bei jedem Aussenden gleich sein (Festcode). Sie können aber auch bei jedem Übertragungsvorgang verändert sein (Wechselcode). Auch können sogenannte Kryptoalgorithmen (Verschlüsselungsalgorithmen) verwendet werden, mit deren Hilfe die Codesignale zusammen mit Zufallszahlen vor jedem erneuten Aussenden der Codesignale erzeugt werden.

Das erfindungsgemäße Schließsystem ist nicht nur für Türschlösser (für Türen. Kofferraum, Tankdeckel, usw.) oder Lenk-/Zündschlösser von Kraftfahrzeugen geeignet. Es kann auch beispielsweise für Türen von Gebäuden verwendet werden.

Bei dem erfindungsgemäßen Schließsystem kann der mechanische Aufbau von herkömmlichen Schlössern für die Riegelvorrichtung 8 übernommen werden. Sowohl bei herkömmlichen Schlössern als auch bei dem erfindungsgemäßen Schließsystem wird ein Riegel durch Drehen des Schlüssels 2 im Schloß 1 aus einer Ausnehmung herausgezogen (entriegeln) oder in die Ausnehmung hineingeschoben (verriegeln). Allerdings geschieht das Entriegeln bei der vorliegenden Erfindung erst dann, wenn die elektronische Authentifikation stattgefunden hat. Das Verriegeln geschieht durch Ausstecken des Schlüssels 2.

Wenn das Schließsystem für ein Lenk- oder Zündschloß eines Kraftfahrzeugs verwendet wird, so wird mit dem Entriegeln des Lenkschlosses auch die Stromversorgung (sogenannte Klemme 15R) für Zubehör, wie Autoradio, und beim Weiterdrehen des Schlüssels 2 die Steuergeräte (sogenannte Klemme 15), wie Motorsteuergerät 9, und - abhängig vom Drehwinkel des Schlüssels 2 - die Stromzufuhr (sogenannte Klemme 50) für dem Starter zum Starten des Motors eingeschaltet. Falls der Vorgang der Authentifikation schnell vonstatten geht, so unterscheidet sich das Schloß 1 des erfindungsgemäßen Schließsystems äußerlich und von seiner Bedienung her nicht von derzeitigen Zündschlössern.

In der obigen Beschreibung ist der Begriff "axial" auf die Achse des im Ausführungsbeispiel dargestellten Zylinderschlosses bezogen. Ein "Drehen" des Schlüssels 2, der Welle 15, des Schiebers 16 oder des Mitnehmers 21 bedeutet daher eine Rotationsbewegung um diese Achse. Die Begriffe "vorne" und "hinten" beziehen sich auf das Schloß 1, wobei mit "vorne" der Bereich des Schlüsselochs gemeint ist und mit "hinten" der diesem entgegengesetzte Bereich am Ende des Schlosses 1.

## Patentansprüche

1. Schließsystem, insbesondere für ein Kraftfahrzeug, mit einem Schlüssel (2) und einem Schloß (1), das eine Sende- und Empfangseinheit (5), die ein Codesignal von einem tragbaren Codegeber (6) empfängt, eine elektromechanische Freigabeeinrichtung (7; 26, 27) und eine Riegelvorrichtung (8) aufweist, wobei der Schlüssel (2), der in dem Schloß (1) steckt und gedreht wird, erst dann mit Hilfe der Freigabeeinrichtung (7) in mechanische Wirkverbindung mit der Riegelvorrichtung (8) gebracht wird, wenn die Sende- und Empfangseinheit (5) zuvor ein berechtigtes Codesignal empfangen hat, so daß dann das Schloß (1) entriegelt wird.

2. Schließsystem nach Anspruch 1, gekennzeichnet durch
- ein Schloßgehäuse (11) mit einer Aufnahme (3), in die der Schlüssel (2) eingeführt wird,
- eine Schalteinrichtung (4), die den eingeführten Schlüssel (2) erkennt und daraufhin ein Schaltsignal erzeugt,
- die Sende- und Empfangseinheit (5), die mit der Schalteinrichtung (4) elektrisch verbunden ist und die infolge des Schaltsignals ein Fragecodesignal drahtlos aussendet und/oder ein Antwortcodesignal von dem tragbaren Codegeber (6) empfängt,
- eine Vergleichseinheit, die in der Sende- und Empfangseinheit (5) angeordnet ist und in der das Antwortcodesignal mit einem erwarteten Sollcodesignal verglichen, wobei bei Übereinstimmung der beiden Codesignale ein Freigabesignal erzeugt wird,
- die Freigabeeinrichtung (7), die mit der Vergleichseinheit elektrisch verbunden ist und die infolge des Freigabesignals von einer Sperrposition in eine Freigabeposition bewegt wird, und
- ein mechanischer Mitnehmer (21), der von einer Freilaufposition in eine Entriegelposition bewegt wird, falls sich die Freigabeeinrichtung (7) in ihrer Freigabeposition befindet, wobei der Schlüssel (2) im Schloß (1) verdreht werden kann, ohne daß die Riegelvorrichtung (8) betätigt wird, wenn sich der Mitnehmer (21) in der Freilaufposition befindet, und wobei die Riegelvorrichtung (8) infolge des Drehens des Schlüssels (2) mechanisch betätigt wird, wenn sich der Mitnehmer (21) in der Entriegelposition befindet.

3. Schließsystem nach einem der vorhergehenden Ansprüche, dadurch gekennzeichnet, daß die Freigabeeinrichtung (7) ein Hubmagnet (26) mit einem elektromagnetisch gesteuerten Hubkolben (27) ist.

4. Schließsystem nach einem der vorhergehenden Ansprüche, dadurch gekennzeichnet, daß die Schalteinrichtung (4) ein Tastschalter ist, der dann geschaltet wird, sobald der Schlüssel ins Schloß eingeführt ist.

5. Schließsystem nach einem der vorhergehenden Ansprüche, dadurch gekennzeichnet, daß die Sende- und Empfangseinheit (5) eine Spule (30) als Sende- und Empfangsantenne aufweist, die radial im Bereich der Aufnahme (3) um das Schloßgehäuse (11) herum gewickelt ist.

6. Schließsystem nach einem der vorhergehenden Ansprüche, dadurch gekennzeichnet, daß der Mitnehmer (21) mechanisch vorgespannt an der Freigabeeinrichtung (8) anliegt, solange sich das Freigabeeinrichtung (7) in ihrer Sperrposition befindet und der Schlüssel (2) im Schloß (1) steckt.

7. Schließsystem nach einem der vorhergehenden Ansprüche, dadurch gekennzeichnet, daß der Mitnehmer (21) einen Steg oder eine Nut (32) aufweist, die in eine Nut bzw. einen Steg (22) der Riegelvorrichtung (8) mechanisch eingreift.

8. Schließsystem nach einem der vorhergehenden Ansprüche, dadurch gekennzeichnet, daß die Freigabeeinrichtung (7) infolge des Freigabesignals von der Sperrposition in die Freigabeposition elektromechanisch bewegt wird und von der Freigabeposition in die Sperrposition mechanisch bewegt wird, sobald der Schlüssel (2) aus dem Schloß (1) ausgesteckt wird.
